# EUROPÄISCHE PATENTANMELDUNG

(11) **EP 0 867 691 A1**
(43) Veröffentlichungstag der Anmeldung: **30.09.1998**
(21) Anmeldenummer: 98890074.2
(22) Anmeldetag: 19.03.1998
(51) Int. Cl.: G01C 22/00, A63C 17/26

(54) **Tachometer für Rollschuhe, Rollbretter od. dgl.**

(30) Priorität: 26.03.1997 AT 524/97
(71) Anmelder: Fancyform Design Engineering, 8074 Graz-Grambach (AT)
(72) Erfinder: Hilgarth, Kurt, Dipl.-Ing., 8054 Graz-Seiersbach (AT)
(74) Vertreter: Köhler-Pavlik, Johann, Dipl.-Ing.

(57) **Zusammenfassung**

Die Erfindung betrifft einen Tachometer für Rollschuhe, Rollbretter oder dergleichen. insbesondere für einspurige Rollschuhe, mit einem Sensor (1), einer elektronischen Schaltung (2), einer mit der elektronischen Schaltung (2) verbundenen Anzeige (3), sowie einer elektrischen Spannungsversorgung (4), wobei der Sensor (1) mit zumindest einer Rolle (13) des Rollschuhs (10), Rollbretts oder dergleichen zur Erfassung der Umdrehung der Rolle (13) und mit der elektronischen Schaltung (2) zur Verarbeitung und Anzeige der vom Sensor (1) herrührenden Signale verbunden ist. Zur Ermittlung und Anzeige der Geschwindigkeit und/oder Strecke in zuverlässiger Weise, ohne Behinderung des Rollschuhläufers oder dergleichen ist vorgesehen, daß die Anzeige (3) vom Läufer während der Fahrt ablesbar ist. Der Sensor (1) kann durch einen an der Rolle (13) befestigten Magneten (8) und einen feststehenden, durch den Magneten betätigbaren Kontakt (7) gebildet werden. Durch die Anwendung eines Korrekturfaktors beziehungsweise einer Korrekturfunktion wird die Geschwindigkeit möglichst an die tatsächliche Geschwindigkeit angenähert.

## Beschreibung

Die Erfindung betrifft einen Tachometer für Rollschuhe, Rollbretter oder dergleichen nach dem Oberbegriff des Patentanspruchs 1 sowie ein Verfahren zur Geschwindigkeitsmessung bei Rollschuhen, Rollbrettern oder dergleichen mit einem solchen Tachometer.

Die Erfindung bezieht sich auf beliebige Rollschuhe, Rollbretter, wie Skateboards oder Rollskier, insbesondere auf einspurige Rollschuhe oder In-line Skates.

Bei vielen Fortbewegungsmethoden ist es üblich, zu Zwecken der Sicherheit, des Trainings oder dergleichen die Geschwindigkeit und/oder die zurückgelegte Strecke zu erfassen. So werden beispielsweise bei Fahrrädern aus der Umdrehung eines Rades die Werte für die zurückgelegte Strecke, die Momentangeschwindigkeit, Spitzengeschwindigkeit usw. ermittelt. Bei Läufern ist es bekannt, mit Hilfe von Schrittzählem, welche auf die durchschnittliche Schrittlänge der jeweiligen Person abgestimmt werden, näherungsweise die zurückgelegte Strecke zu ermitteln und unter Hinzunahme der dafür benötigten Zeit daraus die mittlere Geschwindigkeit zu berechnen.

In letzter Zeit werden häufig Fortbewegungsmittel, wie Rollschuhe, Rollbretter oder dergleichen zum Zweck der sportlichen Ertüchtigung oder der schnelleren Fortbewegung, insbesondere im urbanen Gebiet vermehrt eingesetzt. Bislang ist bei diesen Sportgeräten oder dergleichen eine Geschwindigkeitsmessung nicht durchgeführt worden.

Die US 4 454 411 A beschreibt einen mechanisch oder elektronisch aufgebauten Wegmesser für Rollschuhe, der zwischen dem hinteren Räderpaar montiert ist. Ein Ablesen der Meßwerte wird durch Anheben des Fußes möglich. Aus der US 2 354 708 A ist ein rein mechanisch aufgebauter Wegemesser für Rollschuhe zur ungefähren Bestimmung der zurückgelegten Strecke beschrieben, bei dem die Drehung des Rades untersetzt wird und der Weg mit Hilfe eines Zeigers an einer Skala an der Außenfläche einer Rolle angezeigt wird. Ein Ablesen von der Außenfläche des Rades ist sehr umständlich beziehungsweise während der Fahrt unmöglich. Während bei Wegmessern ein Ablesen auch nach Beendigung der Fahrt durchgeführt werden kann, ist es bei einer Geschwindigkeitsmessung sinnvoll, den Wert auch während der Fahrt abzulesen, abgesehen von Möglichkeiten des Speicherns von Meßwerten, wie Maximalgeschwindigkeit, Mittelwert der Geschwindigkeit od. ähnl. Ein Ablesen der Meßwerte der bekannten Einrichtungen während der Fahrt ist relativ umständlich beziehungsweise sogar gefährlich. Darüberhinaus ist ein Einsatz dieser Einrichtungen bei In-line Skates nicht möglich, da hier die Rollen wesentlich schmäler ausgeführt sind und die mechanischen Komponenten kaum unterzubringen wären.

Ein Ziel der vorliegenden Erfindung ist es, einen Tachometer für Rollschuhe, Rollbretter oder dergleichen der oben angegebenen Art zu schaffen, welcher in zuverlässiger Weise die Geschwindigkeit und/oder den zurückgelegten Weg beziehungsweise davon abgeleitete Größen ermittelt und anzeigt, wobei der Rollschuhläufer oder dergleichen durch den Tachometer nicht in seiner Bewegung behindert werden soll.

Gelöst wird diese Aufgabe dadurch, daß die Anzeige vom Läufer während der Fahrt ablesbar ist. Aus der Umdrehungszahl der Rolle kann unter Kenntnis des mittleren Durchmessers der Rolle sowie der Zeit auf den zurückgelegten Weg sowie die mittlere Geschwindigkeit rückgerechnet werden. Diese Verarbeitung der von der Rolle herrührenden Impulse beziehungsweise anderer Signale wird durch die elektronische Schaltung bewerkstelligt und in einer entsprechenden Einheit an die Anzeige übermittelt, von welcher der Rollschuhläufer oder dergleichen die Geschwindigkeit, den zurückgelegten Weg oder andere Werte während der Fahrt ablesen kann. Mit der Größe heute üblicher miniaturisierter elektronischer Bauelemente und Spannungsquellen ist es möglich, die Einheit so klein zu gestalten, daß sie keine Behinderung für den Rollschuhläufer oder dergleichen darstellt. Die Anzeige kann an einer sichtbaren Stelle des Rollschuhs, Rollbretts oder dergleichen befestigt werden. Bei entsprechender Führung der elektrischen Verbindung zwischen dem Sensor und der Schaltung kann das Gehäuse beziehungsweise die Anzeige auch an beliebigen gut sichtbaren Stellen des Körpers befestigt werden.

Vorteilhafterweise beinhaltet die elektronische Schaltung eine Einrichtung, vorzugsweise einen Mikrokontroller, zur Berechnung abgeleiteter Größen oder von Faktoren zur Korrektur der aus der Umdrehung der Rolle ermittelten Geschwindigkeit.

Gemäß einem weiteren Erfindungsmerkmal sind mit der elektronischen Schaltung Bedienungselemente zur Einstellung oder Veränderung von Parametern und/oder Umschaltung von Funktionen verbunden. Dadurch ist es möglich, den Tachometer an verschiedene Gegebenheiten, wie z.B. verschiedene Rollendurchmesser, anzupassen und daher dieses Gerät für verschiedene Einsatzzwecke brauchbar zu gestalten. Andererseits ist über die Bedienungselemente eine Umschaltung verschiedener Anzeigen, wie z.B. Zeit, Strecke oder Geschwindigkeit sowie ein Rücksetzen der Anzeige oder ein Einstellen der Uhrzeit möglich.

Eine einfache und kostengünstige Variante der Erfindung kann durch Bildung des Sensors durch einen an der Rolle befestigten Magneten und einen feststehenden, durch den Magneten betätigbaren Kontakt geschaffen werden. Dadurch kann der Tachometer in einfacher Weise nachträglich auf den Rollschuh, das Rollbrett oder dergleichen montiert werden, indem der Magnet an der Rolle befestigt wird und der durch den Magnet betätigbare Kontakt, z.B. am Rollenträger oder am Rollbrett, seitlich von der Rolle befestigt wird. Der Magnet kann z.B. spitz oder schraubenförmig ausgeführt sein und in die üblicherweise aus Vollgummi bestehende Rolle eingeschlagen oder eingeschraubt werden. Natürlich ist aber auch eine Befestigung durch Kleben oder andere Mittel denkbar. Der Kontakt, z.B. ein Reed-Kontakt, wird bei Annäherung des Magneten kurzzeitig geöffnet beziehungsweise geschlossen, wodurch pro Umdrehung der Rolle ein Impuls an die elektronische Schaltung weitergegeben wird. Zwischen zwei Impulsen legt die Rolle jenen Weg zurück, der dem Umfang der Rolle entspricht. Bei Kenntnis des Durchmessers der Rolle kann daher daraus der Weg und unter Berücksichtigung der Zeit zwischen den Impulsen die Geschwindigkeit ermittelt werden. Durch entsprechende Analyse, Aufsummierung oder Mittelwertbildung der Signale können Werte, wie Momentangeschwindigkeit, Spitzengeschwindigkeit, mittlere Geschwindigkeit, zurückgelegte Strecke usw. berechnet werden. Mit den heute üblichen integrierten Schaltungen können viele Funktionen in einem einzigen Bauteil untergebracht werden.

Gemäß einem weiteren Erfindungsmerkmal ist der Sensor durch einen Frequenz/Spannungswandler gebildet, welche in besonders kostengünstigen integrierten Schaltungen verfügbar sind. Damit werden die von der Umdrehung der Rolle herrührenden Impulse direkt in analoge Spannungen umgesetzt, die bei entsprechender Kalibrierung direkt zur Anzeige der Geschwindigkeit oder des Weges in den entsprechenden Einheiten herangezogen werden können.

Vorzugsweise sind die elektronische Schaltung, die Anzeige, die elektrische Spannungsversorgung sowie die allfälligen Bedienungselemente in einem gemeinsamen Gehäuse untergebracht. Mit den heutigen miniaturisierten und niederenergetischen elektronischen Bauteilen ist es möglich, das Gehäuse sehr klein zu gestalten, wobei ein Kompromiß geschlossen werden muß, indem die Anzeige so groß gestaltet werden muß, daß der Rollschuhläufer oder dergleichen die Werte mühelos von der Anzeige ablesen kann.

Wenn das Gehäuse vorzugsweise lösbar am Rollschuh, Rollbrett oder dergleichen befestigt ist, kann eine Benutzung des Tachometers für verschiedene Sportgeräte ermöglicht werden oder dieses nur bei Bedarf am Rollschuh oder dergleichen befestigt werden, wodurch ein flexiblerer Einsatz verbunden ist.

Gemäß einem weiteren Erfindungsmerkmal ist die elektrische Verbindung zwischen Sensor und elektronischer Schaltung drahtlos gebildet. Dadurch ist es möglich, die Anzeige vom Rollschuh entfernt, wie z.B. am Handgelenk, zu befestigen, wobei die vom Sensor herrührenden Impulse drahtlos zur elektronischen Schaltung am Handgelenk übermittelt werden. Dies kann z.B. über Hochfrequenz oder Infrarot beziehungsweise akustisch erfolgen. Dadurch, daß keine Verbindung zwischen der Anzeige und dem Sensor exisitiert, ist eine einfachere Befestigung des Gehäuses möglich und kann darüberhinaus das Ablesen der Werte von der Anzeige erleichtert werden.

Eine weitere Aufgabe der Erfindung besteht darin, ein Verfahren zur Geschwindigkeitsmessung bei Rollschuhen, Rollbrettern oder dergleichen mit einem Tachometer gemäß obiger Beschreibung zu schaffen, durch welches die reale Geschwindigkeit in möglichst guter Annäherung ermittelbar ist.

Gelöst wird diese Aufgabe dadurch, daß die aus der Umdrehungszahl und dem Umfang der Rolle(n) ermittelte Geschwindigkeit durch einen Faktor oder eine Funktion korrigiert wird. Durch diesen Korrekturfaktor beziehungsweise die Korrekturfunktion kann z.B. das zeitweise Abheben des Rollschuhs, Rollbretts oder dergleichen berücksichtigt werden und somit die Geschwindigkeit an die realen Verhältnisse angenähert werden. Während des Abhebens eines Rollschuhs beziehungsweise des ganzen Rollbretts oder dergleichen verringert sich die Geschwindigkeit der in der Luft befindlichen Rollen langsam. Dadurch würden die aus der Umdrehungszahl und dem Umfang der Rolle(n) berechneten Werte für die Geschwindigkeit im Mittel zu klein sein. Durch Anwendung eines Korrekturfaktors oder -funktion kann das Abheben des Rollschuhs oder dergleichen oder verschiedene Fahrstile berücksichtigt werden. Der Art und Weise, wie der Korrekturfaktor oder die Korrekturfunktion ermittelt werden, sind keine Grenzen gesetzt. So kann diese durch entsprechende mathematische Plausibilitätsrechnungen oder statistische Verfahren ermittelt werden. Die Ermittlung des Korrekturfaktors beziehungsweise der Korrekturfunktion und die Korrektur der Geschwindigkeit mit diesem Faktor beziehungsweise der Funktion kann kontinuierlich oder in bestimmten zeitlichen Intervallen erfolgen.

Gemäß einer Variante des erfindungsgemäßen Verfahrens wird der Faktor oder die Funktion zur Korrektur der Geschwindigkeit aus dem Verlauf der Umdrehungszahl der Rolle(n) abgeleitet. Verschiedene Fahrweisen können am Verlauf der Umdrehungszahl erkannt werden und dadurch eine entsprechende Korrektur der Geschwindigkeit durchgeführt werden, sodaß die angezeigten Werte für die Geschwindigkeit, den Weg oder dergleichen in möglichst großer Annäherung den realen Werten entsprechen.

Gemäß einem anderen vorteilhaften Verfahren wird der Faktor oder die Funktion zur Korrektur der Geschwindigkeit aus der Beschleunigung und der Verzögerung der Rolle(n) abgeleitet.

Die verschiedensten Methoden zur Bestimmung des Korrekturfaktors beziehungsweise der Korrekturfunktion können softwaremäßig leicht in der elektronischen Schaltung in z.B. Mikrokontrollern oder dergleichen implementiert werden, wodurch die Baugröße des Gehäuses nicht wesentlich erhöht wird.

Anhand der beigefügten Abbildungen wird ein Ausführungsbeispiel der Erfindung näher beschrieben.

Darin zeigen
- Fig. 1: das Blockschaltbild eines erfindungsgemäßen Tachometers für Rollschuhe, Rollbretter oder dergleichen,
- Fig. 2: das Blockschaltbild einer erweiterten Ausführungsform des erfindungsgemäßen Tachometers,
- Fig. 3: die Anwendung des erfindungsgemäßen Tachometers auf einem einspurigen Rollschuh in Seitenansicht, und
- Fig. 4: eine Detailansicht einer Rolle eines Rollschuhs, Rollbretts oder dergleichen mit einer Ausführungsform des Sensors in Seitenansicht sowie im Querschnitt.

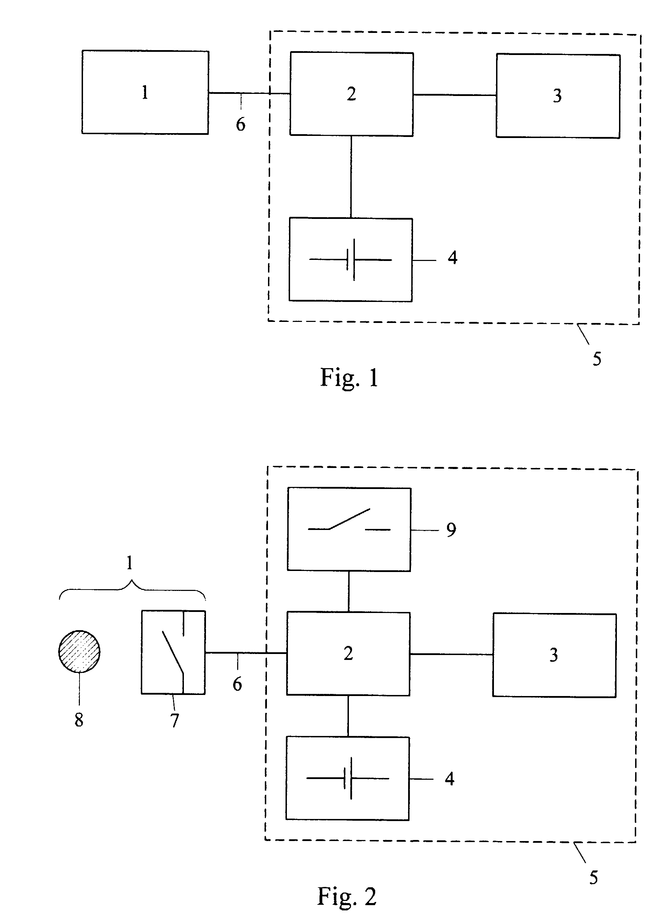

Der Tachometer gemäß Fig. 1 besteht aus einem Sensor 1, einer elektronischen Schaltung 2, einer Anzeige 3 sowie einer elektrischen Spannungsversorgung 4. Die Spannungsversorgung 4 kann z.B. durch eine Batterie oder einen Akkumulator gebildet sein, wobei eine möglichst geringe Baugröße von Vorteil ist. Theoretisch ist auch die Ableitung der elektrischen Energie aus der Bewegung des Rollschuhs, Rollbretts oder dergleichen denkbar. Vorzugsweise sind die elektronische Schaltung 2, die Anzeige 3 sowie die elektrische Spannungsversorgung 4 in einem gemeinsamen Gehäuse 5 angeordnet. Das Gehäuse 5 wird an einer sichtbaren Stelle des Rollschuhs, Rollbretts oder dergleichen befestigt, während der Sensor 1 an der Rolle des Rollschuhs, Rollbretts oder dergleichen montiert wird. Zwischen dem Sensor 1 und der elektronischen Schaltung 2 ist eine elektrische Verbindung 6 angeordnet. Die elektronischen Schaltung 2 umfaßt auch die allfälligen Einrichtungen zur Berechnung abgeleiteter Größen oder von Faktoren zur Korrektur der Geschwindigkeit.

Die Ausführungsform gemäß Fig. 2 zeigt eine erweiterte Variante des Tachometers. Dabei ist der Sensor 1 durch einen Kontakt 7 und einen Magnet 8 gebildet. Der Magnet 8 wird an der Rolle des Rollschuhs, Rollbretts oder dergleichen befestigt, sodaß dieser die Drehung der Rolle mitmacht. Seitlich von der Rolle ist der Kontakt 7 angeordnet, welcher bei Vorbeibewegung des Magnets 8 einen Impuls abgibt, der über die elektrische Verbindung 6 an die elektronische Schaltung 2 weitergegeben wird. Zusätzlich können voteilhafterweise Bedienungselemente 9 mit der elektronischen Schaltung 2 verbunden sein, welche zum Einstellen oder Verändern von Parametern, wie z.B. dem Rollendurchmesser oder zur Umschaltung von Funktionen beziehungsweise zum Rücksetzen von Funktionen, dienen können. Die Bedienungselemente 9 sind vorzugsweise ebenfalls in dem gemeinsamen Gehäuse 5 untergebracht.

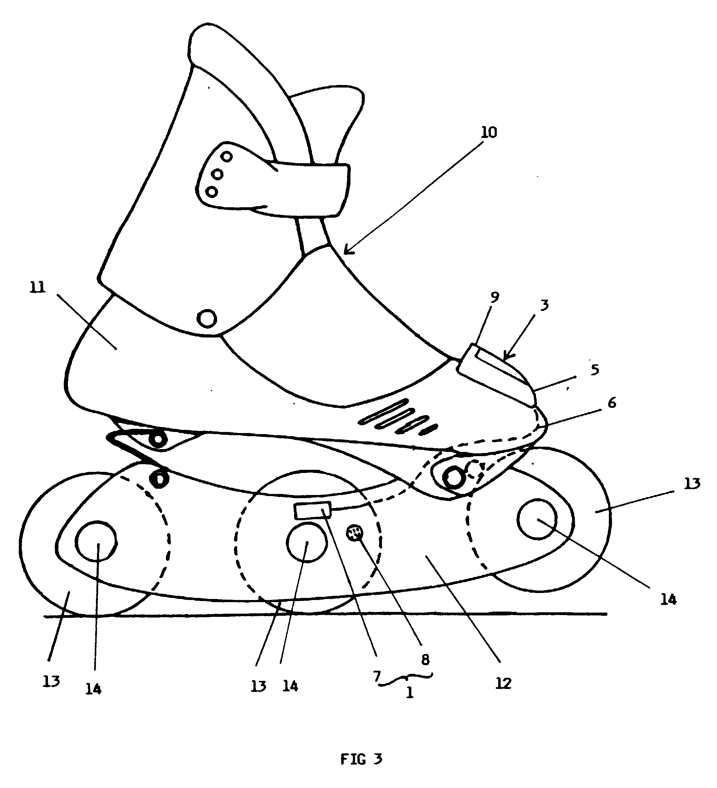

In Fig. 3 ist die Anordnung des erfindungsgemäßen Tachometers auf einem einspurigen Rollschuh 10 dargestellt. Der Rollschuh 10 besteht aus einem Schuhkörper 11 und einem Rollenträger 12, auf welchem die Rollen 13 über Achsen 14 befestigt sind. Am Reifen einer Rolle 13 ist der Magnet 8 angeordnet, welcher bei einem Kontakt 7, der am Rollenträger 12 befestigt ist, bei Drehung der Rolle 13 vorbeibewegt wird. Bei Annäherung des Magneten 8 an den Kontakt 7, wird dieser geöffnet oder geschlossen. Der Kontakt 7, welcher z.B. als Reed-Kontakt ausgeführt sein kann, ist über eine Verbindung 6 mit der im Gehäuse 5 befindlichen elektronischen Schaltung verbunden. Im Gehäuse 5 sind weiters die elektrische Spannungsversorgung 4 und die Anzeige 3 sowie allfällige Bedienungselemente 9 angeordnet. Die vom Sensor 1 herrührenden Signale werden in der elektronischen Schaltung 2 bei Kenntnis des Durchmessers der Rolle 13 in entsprechende Weg- beziehungsweise unter Hinzunahme der Zeit in entsprechende Geschwindigkeitswerte umgerechnet und an der Anzeige 3 dargestellt. Die Anzeige 3 muß dabei so groß gewählt werden, damit die dargestellten Werte vom Rollschuhläufer leicht ablesbar sind. Zum Zwecke der besseren Ablesbarkeit können die Werte auch in Form von Balken oder Zeiger dargestellt werden. Natürlich kann die elektrische Verbindung 6 auch drahtlos gebildet werden. Zu diesem Zweck können die Signale des Kontakts 7 über Infrarot beziehungsweise Hochfrequenz oder Ultraschall an die elektronische Schaltung 2 übertragen werden. Dabei muß der Sensor 1, beziehungsweise der Kontakt 7, mit einer eigenen Spannungsquelle versorgt werden und mit einem entsprechenden Sender ausgestattet werden. Darüberhinaus müssen in der elektronischen Schaltung 2 entsprechende Empfangseinrichtungen vorhanden sein. In einem solchen Fall kann die Anzeige 3 beziehungsweise das die Anzeige 3 enthaltende Gehäuse 5, z.B. auch am Handgelenk angeordnet werden, sodaß ein Ablesen der Werte von der Anzeige leichter möglich ist.

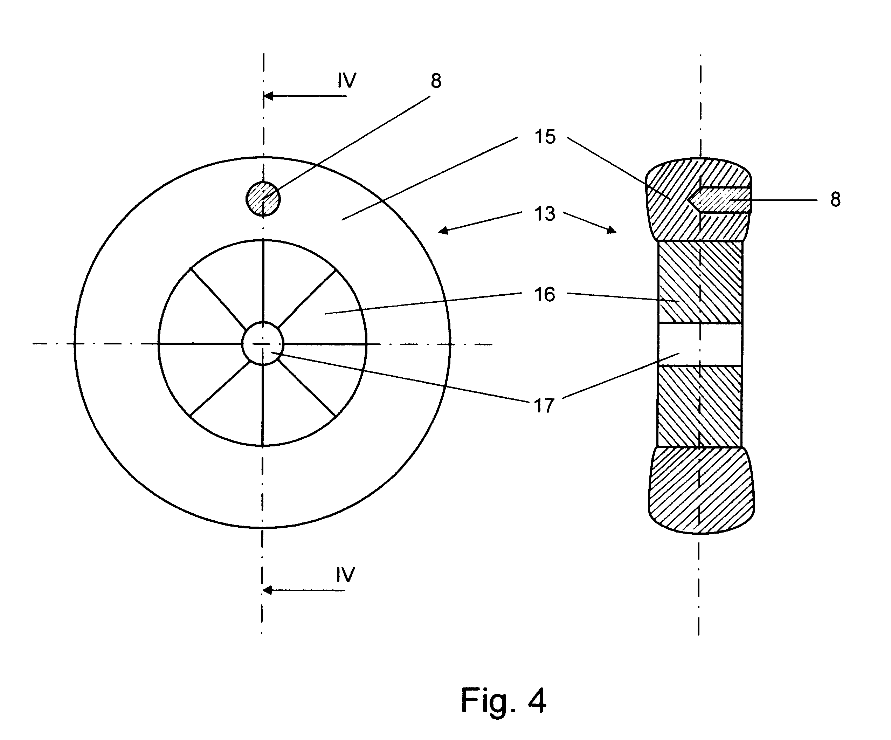

In Fig. 4 ist im Detail die Anordnung des Magneten 8 an der Rolle 13 wiedergegeben. Die Rolle 13 besteht aus dem Reifen 15 und einer Felge 16, welche mit einer Bohrung 17 versehen ist, durch welche die Rolle 13 z.B. am Rollenträger 12 befestigt wird. Vorteilhafterweise wird der Magnet 8 die Form einer Schraube beziehungsweise eines Keils od. ähnl. aufweisen, der in den Reifen 15, welcher üblicherweise aus Kunststoff besteht, eingedrückt beziehungsweise eingeschraubt wird. Dies stellt eine einfache und billige Variante des Sensors 1 zur Geschwindigkeitsmessung bei einem Rollschuh, Rollbrett oder dergleichen dar.

## Patentansprüche

1. Tachometer für Rollschuhe, Rollbretter oder dergleichen, insbesondere für einspurige Rollschuhe, mit einem Sensor (1), einer elektronischen Schaltung (2), einer mit der elektronischen Schaltung (2) verbundenen Anzeige (3), sowie einer elektrischen Spannungsversorgung (4), wobei der Sensor (1) mit zumindest einer Rolle (13) des Rollschuhs (10), Rollbretts oder dergleichen zur Erfassung der Umdrehung der Rolle (13) und mit der elektronischen Schaltung (2) zur Verarbeitung und Anzeige der vom Sensor (1) herrührenden Signale verbunden ist, dadurch gekennzeichnet, daß die Anzeige (3) vom Läufer während der Fahrt ablesbar ist.

2. Tachometer nach Anspruch 1, dadurch gekennzeichnet, daß die elektronische Schaltung (2) eine Einrichtung, vorzugsweise einen Mikrokontroller, zur Berechnung abgeleiteter Größen oder von Faktoren zur Korrektur der aus der Umdrehung der Rolle (13) ermittelten Geschwindigkeit beinhaltet.

3. Tachometer nach Anspruch 1 oder 2, dadurch gekennzeichnet, daß mit der elektronischen Schaltung (2) Bedienungselemente (9) zur Einstellung oder Veränderung von Parametern und/oder Umschaltung von Funktionen verbunden sind.

4. Tachometer nach einem der Ansprüche 1 bis 3, dadurch gekennzeichnet, daß der Sensor (1) durch einen an der Rolle (13) befestigten Magneten (8) und einen feststehenden, durch den Magneten betätigbaren Kontakt (7) gebildet ist.

5. Tachometer nach einem der Ansprüche 1 bis 3, dadurch gekennzeichnet, daß der Sensor (1) durch einen Frequenz/Spannungswandler gebildet ist.

6. Tachometer nach mindestens einem der Ansprüche 1 bis 5, dadurch gekennzeichnet, daß die elektronische Schaltung (2), die Anzeige (3), die elektrische Spannungsversorgung (4) sowie allfällige Bedienungselemente (9) in einem gemeinsamen Gehäuse (5) untergebracht sind.

7. Tachometer nach Anspruch 6, dadurch gekennzeichnet, daß das Gehäuse (5) vorzugsweise lösbar am Rollschuh (10), Rollbrett, oder dergleichen befestigt ist.

8. Tachometer nach mindestens einem der Ansprüche 1 bis 7, dadurch gekennzeichnet, daß die elektrische Verbindung (6) zwischen Sensor (1) und elektronischer Schaltung (2) drahtlos gebildet ist.

9. Verfahren zur Geschwindigkeitsmessung bei Rollschuhen, Rollbrettern oder dergleichen, insbesondere bei einspurigen Rollschuhen mit einem Tachometer gemäß mindestens einem der Ansprüche 1 bis 8, dadurch gekennzeichnet, daß die aus der Umdrehungszahl und dem Umfang der Rolle(n) ermittelte Geschwindigkeit durch einen Faktor oder eine Funktion korrigiert wird.

10. Verfahren nach Anspruch 9, dadurch gekennzeichnet, daß der Faktor oder die Funktion zur Korrektur der Geschwindigkeit aus dem Verlauf der Umdrehungszahl der Rolle(n) abgeleitet wird.

11. Verfahren nach Anspruch 8, dadurch gekennzeichnet, daß der Faktor oder die Funktion zur Korrektur der Geschwindigkeit aus der Beschleunigung und der Verzögerung der Rolle(n) abgeleitet wird.
